# EUROPEAN PATENT SPECIFICATION

(11) **EP 4 224 782 B1**
(45) Date of publication and mention of the grant of the patent: **11.09.2024**
(21) Application number: 23155446.0
(22) Date of filing: 07.02.2023
(51) Int. Cl.: H04B 10/118, H04B 10/70, H04L 9/08

(54) **FREE SPACE QUANTUM KEY DISTRIBUTION**
FREIRAUMQUANTENSCHLÜSSELVERTEILUNG
DISTRIBUTION DE CLÉ QUANTIQUE EN ESPACE LIBRE

(30) Priority: 07.02.2022 GB 202201551
(43) Date of publication of application: 09.08.2023
(73) Proprietor: Aegiq Ltd, Sheffield S1 2NS (GB)
(72) Inventor: LYONS, Thomas, Sheffield S1 2NS (GB); DUFFERWIEL, Scott, Sheffield S1 2NS (GB); SICH, Maksym, Sheffield S1 2NS (GB)
(74) Representative: Barker Brettell LLP

(56) References cited:
- WO-A1-2019/139544
- CN-A- 102 075 260
- CN-A- 109 462 478
- CN-A- 110 620 616

## Description

### Field of the Invention

The present invention relates to free space quantum key distribution (QKD), and in particular to the optimisation of bit rate in free space QKD systems.

### Background to the Invention

Quantum key distribution (QKD) is the process of sending a stream of single photons between two parties (conventionally referred to as Alice and Bob) in order to generate a number of secret keys between them. The two parties may be moving bodies (satellites, vehicles) or fixed locations (satellite ground stations, ground-to-ground telescopes) as described, for example, in WO2019/139544. Over long distances, the photons must be transmitted through a quantum channel, which may be either optical fibre or a free space connection. While a fibre link generally has a constant overall channel loss, determined by the total length of fibre, the loss per unit length of fibre, and the losses introduced by splices and connections, a free space link has variable channel loss, as a multitude of factors can influence the transmissivity of the volume of space between the transmitter and receiver, and beam diffraction and pointing errors likely also vary with time. A greater degree of channel loss leads to lower secure bit rates stemming from reduced photon count in the receiver. This can be countered by increasing the repetition rate of single photon emission, but this is typically not variable in real-world QKD implementations, which typically use attenuated laser pulses to approximate a single photon source, because the repetition rate is set by the laser.

The security of QKD relies on the no-cloning theorem, which is applicable only to single photons. In order to send a suitable stream of photons, ideally a photon source is provided which can generate single photons on demand. As single photon sources (SPSs) have historically been difficult to realise technologically, existing implementations of QKD typically use photon sources in the form of strongly attenuated laser pulses, referred to as Weak Coherent Pulse (WCP) sources, to provide an approximation of a single photon stream. The attenuation is such that on average the number of photons per pulse is less than 1. However, as laser emission follows the Poisson photon number distribution, there is always a predictable probability of two, three or more photons being emitted in any one pulse. Such multiphoton pulses are highly undesirable in QKD as they circumvent the no-cloning theorem and expose the communication to the powerful photon number splitting (PNS) attack, in which an eavesdropper (conventionally referred to as Eve) can obtain information on the secret key without modifying the error rate measured by the two legitimate parties. To compound the problem, as each multiphoton state contains more than one photon, they are more likely to induce a detection event in Bob's detectors than single photon states (even if only one photon survives the channel), and therefore in the limit of extremely high channel loss, the transmission is dominated by insecure multiphoton states. Therefore, the maximum tolerable channel loss for QKD to be provably secure is strongly limited by the multiphoton emission probability of the transmitter.

A different way to implement QKD is to use an SPS in the form of a single quantum emitter which can provide the stream of single photons if it is triggered at a desired frequency, for example by being optically pumped with a pulsed laser, producing a single photon in response to each trigger event. However, such devices typically have a small but important non-zero probability of emitting two or more photons per pulse instead of the desired single photon. While attenuated coherent laser pulses follow the Poisson distribution for multiphoton states, i.e. multiple photons in any single attenuated pulse, the SPS multiphoton probability depends on the quality of the SPS in question. It is very difficult or impossible to know exactly this multiphoton probability, but a good upper bound can be obtained by a measurement of the second order correlation at zero time delay, or g⁽²⁾(0), of the SPS emission, as described in "Security aspects of quantum key distribution with sub-Poisson light" E. Waks, et al., Physical Review A, 66, 042315 (2002), https://doi.org/10.1103/PhysRevA.66.042315. Importantly, SPSs have the potential to emit a very small or negligible fraction of multiphoton states, and in this aspect they are superior to any QKD implementation relying on attenuated coherent pulses, because they are essentially immune to the powerful PNS attack. Weak Coherent Pulse (WCP) implementations must employ the so-called decoy state method to defend against this attack, which reduces the maximum achievable bit rate, as a certain fraction of detected pulses are sacrificed for privacy amplification rather than contributing to the secure key. SPSs can also be triggered at exceptionally rapid speeds (GHz) allowing high bit rates, and may be configured to operate in low size/weight/power (SWP) devices, suitable for satellite implementations.

It has been shown, for example in the E. Waks paper referred to above, that if additional deliberate attenuation is applied to the output from an SPS, then the proportion of multiphoton states relative to single photon states can be improved, at the expense of secure bit rate. This occurs because the attenuation will reduce the single photon state gain linearly, while reducing the multiphoton state gain quadratically, giving an overall lower bit rate but with a highly suppressed multiphoton content. As the multiphoton probability of the photon stream is a limiting factor in the maximum tolerable channel loss, adding deliberate attenuation to the output of the SPS can enable secure quantum key distribution in free-space implementations where channel loss could otherwise be prohibitively high (typically in excess of 40 dB). Conversely, however, if the channel loss is low, the additional attenuation will unnecessarily throttle the secure bit rate.

A prime example of a free space quantum channel is that realised between a low Earth orbit (LEO) satellite and a ground station. Here, photons are emitted at either end of the channel and detected at the other end, for a short (100s of seconds) time window as the satellite passes over a ground station. Factors influencing channel loss in this scenario are: atmospheric conditions (air temperature, humidity, convection currents, turbulence); beam broadening due to diffraction; beam pointing errors (misalignment); the optical efficiency of the transmitting and receiving telescopes; the ground to satellite distance; the weather (cloud cover); and noise in the form of background light, which depends on the time of day. This is described in "Satellite-based links for quantum key distribution: beam effects and weather dependence", C. Liorni, et al., New J. Phys. 21 093055 (DOI: 10.1088/1367-2630/ab41a2). All of these factors will increase the probability of photon absorption or scattering in the channel, blocking the number of successfully detected photons and reducing the overall bit rate. Crucially, even in the optimum scenario with no cloud cover, still and clear atmospheric conditions, accurate tracking and beam pointing, the channel loss will vary drastically between the LEO satellite and the ground station during the transmission time window. This occurs because the line-of-sight distance between transmitter and receiver changes significantly as the satellite approaches and then recedes from its transit zenith, exacerbating beam broadening due to diffraction and leading to significant geometric loss. Moreover, at oblique angles near the beginning and end of the transmission window, the distance photons must travel through lossy atmosphere (rather than low-loss vacuum) is much longer than at the zenith. Besides ground-to-satellite quantum channels, free space links may also be implemented between two locations on the ground, or two moving manned/unmanned vehicles, etc., and in the vast majority of free space links over any appreciable distance, channel loss variation will be significant.

WO2019/139544 describes a quantum key distribution system comprising a single photon source. CN102075260A describes a single photon source comprising pulsed laser and a variable attenuator.

### Summary of the Invention

The present invention provides a quantum key distribution system comprising: a transmitter arranged to transmit a coded photon stream over a free space quantum channel, wherein the transmitter comprises a single photon source arranged to generate a coded photon stream comprising photons representing QKD bit values, and attenuation means arranged to attenuate the coded photon stream, the attenuation means being variable so as to provide a variable attenuation of the coded photon stream; a receiver arranged to receive the coded photon stream from the quantum channel; and control means arranged to control the attenuation means so as to vary the attenuation.

The control means may be arranged to control the attenuation means to vary the attenuation as a function of time. Alternatively the control means may be arranged to control the attenuation means to vary the attenuation as a function of position of at least one of the transmitter and the receiver. For example if the transmitter or the receiver is on a satellite, the attenuation may be varied as a function of the position of the satellite.

The system may further comprise loss measuring means arranged to measure channel loss on the quantum channel. The loss measuring means may be connected to the control means. The control means may be arranged to output a control signal indicative of the channel loss. The control signal may be input to the attenuation means. The attenuation means may be arranged to vary the attenuation in response to variation in the measured channel loss.

The receiver may comprise a receiver unit arranged to receive and/or detect the coded photon stream and process it to generate a secret key shared between the transmitter and the receiver. The secret key may be generated according to any suitable QKD protocol.

The loss measuring means may be arranged to transmit a reference beam of photons between the transmitter and the receiver. The loss measuring means may be arranged to measure losses in the reference beam thereby to measure the channel loss on the quantum channel. The loss measuring means may comprise a reference photon generator, which may be on the receiver. The loss measuring means may comprise a reference photon detector, which may be on the transmitter. The reference beam may be a laser beam. The laser beam may be a continuous wave, or a pulsed, laser beam. The transmitter may be arranged to use the reference beam to monitor alignment of the transmitter and the receiver. The reference beam may have the same wavelength as the coded photon stream.

The coded photon stream may represent the QKD bit values in the polarizations or phases of the photons, or using time-bin encoding of single photons or constituent photons of entangled pairs, or any other suitable coding method using any appropriate parameter of the photons.

The single photon source may comprise a triggered quantum emitter. The single photon source may further comprise a trigger system arranged to cause trigger events. Each trigger event may be arranged to generate a single photon from the quantum emitter. The single photon source may be optically triggered, for example using laser pulses, or electrically triggered. WO2021/048560 describes some suitable single photon sources. Other suitable on-demand single photon sources include: single atoms/ions/molecules which can have g⁽²⁾(0) ~ 10⁻² at cryogenic temperatures; color centers (e.g. nitrogen vacancy), which can have g⁽²⁾(0) ~ 10⁻¹ to 10⁻² at 300K; InAs and other III-V semiconductor quantum dots which can have g⁽²⁾(0) ~ 10⁻² to 10⁻⁵ at 4K; electrically injected SPSs such as CdSe/ZnS quantum dots which can have g⁽²⁾(0) ~ 10⁻³ at 300K; GaN-based SPSs which can have g⁽²⁾(0) ~ 10⁰ to 10⁻¹ between 200K and 4K; and electrically injected SPSs which can have g⁽²⁾(0) ~ 10⁻¹ at 300K.

In some embodiments of the present invention a variable deliberate attenuation can allow optimized bit rate under all conditions: in cases of low channel loss, no additional attenuation is applied and therefore the bit rate is maximised; and in cases of high channel loss, deliberate attenuation may be introduced in order to suppress the multiphoton content and ensure that secure keys can still be generated despite the high loss and hence lower bit rate resulting from the attenuation.

The system may utilise a reference photon path, for example a laser beam path, which is separate from the quantum channel. Here, the laser may perform the function of monitoring channel loss in real time, for example by simple intensity measurement. A proportional-integral-derivative (PID) controller, or other suitable controller, may determine the optimum amount of attenuation to be added to the SPS output, i.e. the coded photon beam, before that beam enters the quantum channel. Although tracking and clock lasers will typically already exist in any free-space QKD implementation, the reference beam used here preferably matches, or at least approximates to, the wavelength of the SPS to ensure that the channel loss measurement is applicable to the quantum channel. For example, the wavelength of the reference beam may be no more than 10%, preferably no more than 5%, longer, and no more than 10%, preferably no more than 5%, shorter, than the wavelength of the SPS. Therefore, the laser used for channel loss monitoring may be the same as, or a different laser to, the tracking/clock laser. Alternatively the reference beam may have a different wavelength from the coded photon stream, and the loss measuring means may be arranged to define a relationship between measured loss of the reference beam and channel loss of the coded photon stream, and to determine the channel loss from measurements of the reference beam. The system may therefore provide a feedback loop by means of which the secure key rate is maximised in response to any variations in channel loss.

### Brief Description of the Drawings

**Figure 1** is a schematic diagram of a QKD system with a free space quantum channel;
**Figure 2** is a schematic diagram of a low earth orbit satellite system according to an embodiment of the invention;
**Figure 3** is a plot showing simulated variation of channel loss with angle of elevation during transit in the system of Figure 2;
**Figure 4** is a schematic diagram of a QKD system of the system of Figure 1;
**Figure 5** is a functional diagram of part of the system of Figure 4;
**Figure 6** is a plot showing secure bit rate as a function of channel losses for various different source attenuations;
**Figure 7** is a plot similar to that of Figure 6 for a higher quality (lower g⁽²⁾(0) value) single photon source;
**Figure 8** is a plot showing how the source attenuation is varied with measured channel loss in the system of Figure 4; and
**Figure 9** is a schematic diagram of a QKD system according to a further embodiment of the invention;
**Figure 10** is a schematic diagram of a QKD system according to a further embodiment of the invention and
Figure 11 is a schematic diagram of a QKD system according to a further embodiment of the invention.

### Detailed Description

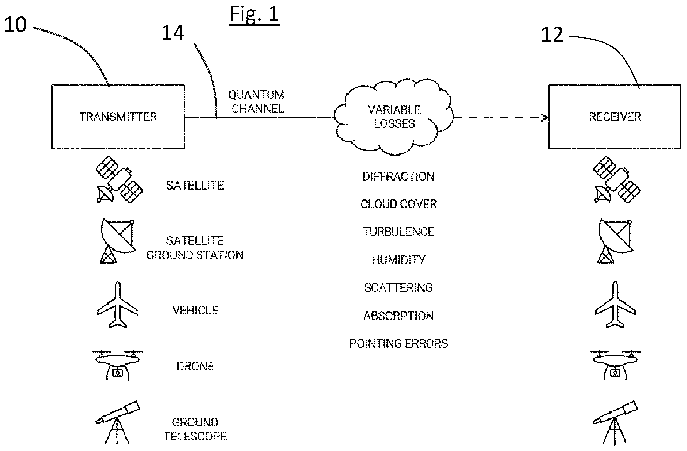

Referring to Figure 1, a free space QKD system comprises a transmitter 10, and a receiver 12 with a free space quantum channel 14 for communication between the transmitter 10 and receiver 12. Examples of transmitter and receiver systems include satellites and associated ground stations, vehicles, drones, and ground telescopes. The free space quantum channel 14 is subject to variable losses which can be caused by a number of factors such as diffraction, cloud cover, turbulence, humidity, scattering, absorption and pointing errors. As will be appreciated all of these factors can vary significantly over time for a practical free-space system.

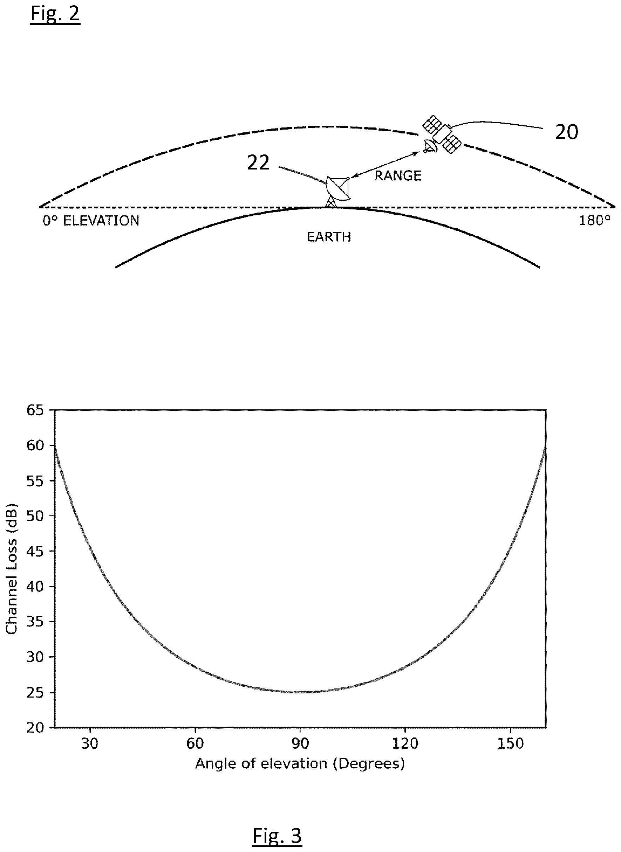

Referring to Figure 2, in a QKD system including a satellite 20, travelling in an orbit, and a ground station 22, the range between the satellite 20 and the ground station 22 varies considerably depending on the elevation of the satellite 20 above the horizon, as seen from the ground station. The elevation of the satellite from the horizon, as measured from one side of the ground station 22, varies from zero at the horizon, to 90° when the satellite 20 passes directly over the ground station 22, to 180° when the satellite reaches the horizon on the other side of the ground station 22, assuming the satellite does pass over the ground station.

Referring to Figure 3, the channel loss in optical communications between the satellite 20 and the ground station 22 varies with the angle of elevation, being highest closer zero and 180° elevation, and lowest at 90° elevation. The variation in channel loss shown in Figure 3 is an idealised simulation, showing the variation of channel loss arising from the variation in path length of the quantum channel, i.e. the variation of the ground station to satellite distance, assuming no change in the atmospheric conditions. In addition to this smooth variation, there will also be further fluctuations in channel loss caused by time-varying beam diffraction, pointing errors and variations in the atmospheric conditions (cloud cover, air temperature, turbulence, moisture content etc.) in the path of the quantum channel as that path changes during the orbit of the satellite.

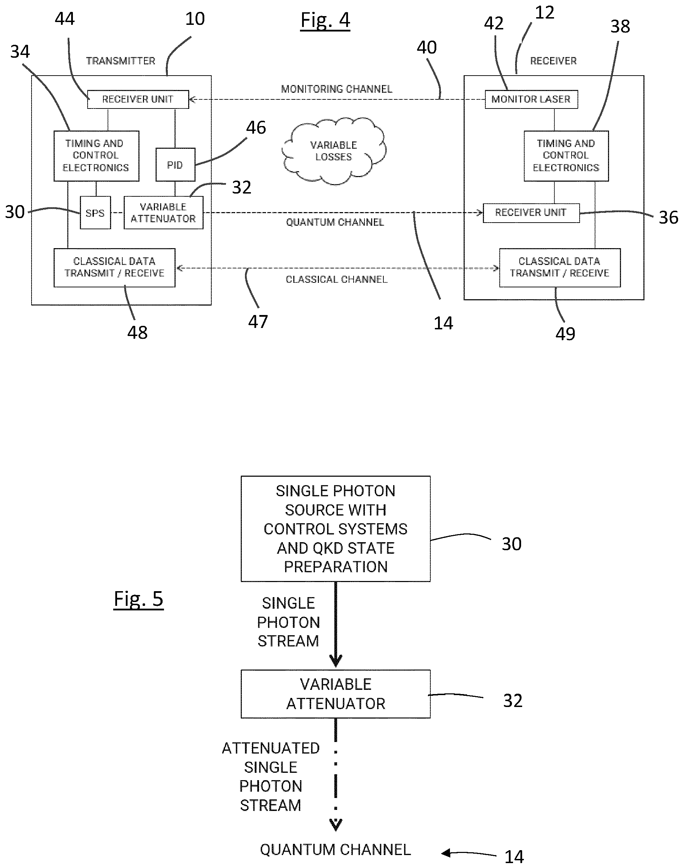

Referring to Figures 4 and 5, as described above, the quantum key distribution system comprises a transmitter 10 and a receiver 12. One of those may be located on the ground station 22 and the other on the satellite 20, for example. The transmitter 10 comprises a single photon source (SPS) 30 and a variable attenuator 32. The SPS 30 may be an optically or electrically triggered SPS. For example it may comprise a quantum emitter and a trigger mechanism such as a pulsed laser. Various suitable SPS devices are known as described above. The SPS 30 is arranged to generate a stream of photons each of which represents a QKD bit value. Typically the bit values are represented by the polarization states of the photons, but they may alternatively be represented by the phase or time delay of the photons, or any other suitable parameter of the photons. The variable attenuator 32 may be in the form of an electro-optic modulator (EOM) which controllably applies attenuation to the optical beam by the application of an electric field. Suitable EOM devices are readily available. Control and timing of the SPS 30 may be provided by dedicated controller 34 comprising appropriate circuitry and/or software, which can control the extraction and direction of a coded photon stream from the SPS 30. The receiver 12 is arranged to receive photons over the quantum channel 14, for example by means of a receiver unit 36. The receiver unit may also comprise a controller 38 comprising appropriate circuitry and/or software. Typically the receiver unit 36 will be arranged to measure or detect the relevant parameter of the photons thereby to read the QKD bit values of the received photons in order to generate a secret key shared with the transmitting party.

A monitoring channel 40 is also provided between the transmitter 10 and receiver 12, for example comprising a monitor laser 42 forming part of the receiver 12 and a receiver unit 44 forming part of the transmitter 10. The monitoring channel 40 may also serve as a tracking channel which is typically used to ensure suitable alignment between the transmitter 10 and receiver 12, so that the quantum channel can operate. A classical (i.e. non-quantum) channel 47 is also provided between the transmitter 10 and the receiver 12. This operates between a classical data transmit/receive unit 48 forming part of the transmitter 10 and a further classical data transmit/receive unit 49 forming part of the receiver 12. The classical channel 47 is used to compare basis information between the transmitter 10 and the receiver 12 in order to establish the secret key. It may also be used for the sending of any other information between the two parties (encrypted, possibly using the key generated by QKD, or unencrypted). Typically the classical channel operates at microwave wavelengths, or within a similar satellite communications band (1-40 GHz), but other wavelengths may be used.

In addition to its normal tracking functions, the monitoring channel 40 may also be used as a means of measuring losses in the quantum channel as they vary over time. The monitor laser is typically arranged to transmit at a fixed wavelength and a fixed intensity. The receiver unit 44 may be arranged to measure the intensity of the laser light received from the monitor laser 42, and from that, and the known transmission intensity of the laser, to determine the total channel loss on the monitoring channel. Since the monitoring channel and the quantum channel are physically very close together, or even share the same physical beamline by time or wavelength division multiplexing, the loss on the monitoring channel can be used as a measure of the loss on the quantum channel. The accuracy of that measurement will also depend on the wavelengths of the monitoring laser and the photons from the SPS 30, since the loss typically varies with wavelength. Therefore ideally the monitoring channel laser 42 is arranged to generate laser light at the same wavelength as the SPS photons. However even if there is some difference between the two wavelengths, for example if the wavelength of the monitoring channel laser is within 5% longer or shorter than the wavelength of the SPS, the measurement of channel loss will generally still be accurate enough to be useful.

The monitoring channel may work, for example, by time division or wavelength division multiplexing a short (nanoseconds) laser pulse into the stream of single photons on the quantum channel, so that the monitoring channel and the quantum channel share a common path. After passing through the monitoring channel on that common path, the monitor pulses can be separated from the coded single photon pulses by demultiplexing. If separated in either time or wavelength from the single photon channel, the monitor pulses can undergo intensity measurement without influencing the single photon communication. If wavelength division multiplexing is used, the wavelength difference should be relatively small such that the monitor still acts as a reliable measure of wavelength-dependent losses acting on the quantum channel. The repetition rate of the monitor laser pulses does not need to correspond to the repetition rate of the single photon pulses, it could be a multiple of an integer value slower, e.g. the monitor laser could pulse at 10x slower rate than the SPS and still give a reliable measure of the channel loss.

The measured channel loss, or indeed the measured received laser intensity, may be used to generate a control signal which is input to the variable attenuator 32 which in response to that control signal is arranged to control the attenuation applied to the output from the SPS 30. For example a proportional/integral/derivative (PID) controller 46 may be arranged to receive a signal from the receiver unit 44 that varies with the received laser intensity, and to generate a control signal which is input to the variable attenuator 32 to control the attenuation of the SPS output.

In a modification to the system of Figures 4 and 5 the reference beam 40 has a different wavelength from the SPS 30, and the system is arranged to define a relationship between measured loss of the reference beam 40 and channel loss of the coded photon stream on the quantum channel 14. The system may then be arranged to determine the channel loss from measurements of the reference beam. For example the PID controller 46 may be arranged, after having determined the loss on the monitoring channel 40 from measurement of the intensity of the received monitoring beam, to convert that to a loss on the quantum channel 14 using a relationship between the two stored in memory in the PID controller 46. The loss on the quantum channel so determined may then be used to control the variable attenuator as described above.

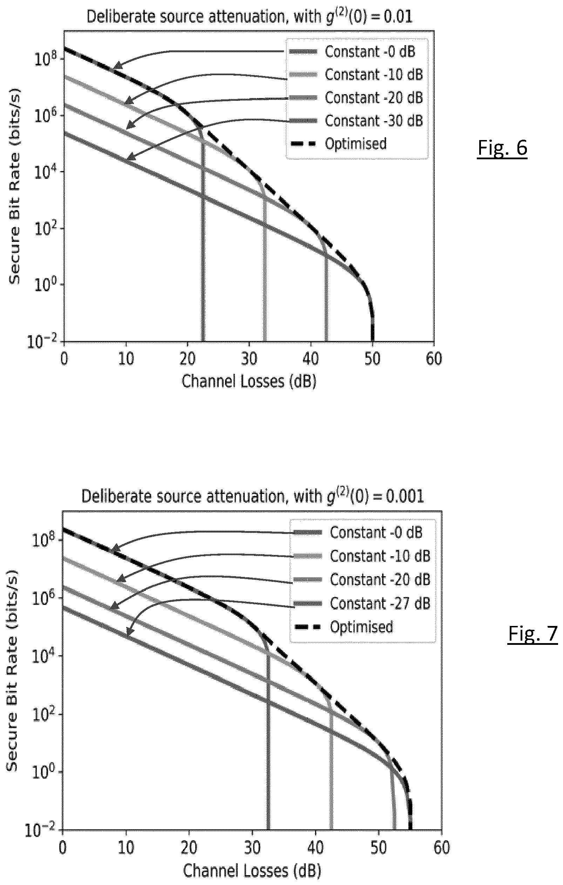

Referring to Figures 6 and 7, simulations show that, for any fixed source attenuation, the secure bit rate (i.e. successfully detected photons per second eligible for use to generate a secret key) decreases with increasing channel loss up to a maximum tolerable channel loss, and then drops rapidly to zero. The 0dB curves show the case of no additional source attenuation, where the bit rate is very high but the system can only tolerate a low channel loss. However, if the fixed source attenuation is increased, for example to 10dB, 20dB or 30dB as shown, the secure bit rate is lowered for low channel losses, but the maximum tolerable channel loss is increased. The 30dB and 27dB curves show the case of strong additional attenuation (>20 dB added before the quantum channel), where the maximum tolerable channel loss is pushed to >50 dB. Therefore, in order to optimize the secure bit rate for varying channel loss, the source attenuation is increased as the channel loss increases, so that the secure bit rate follows the broken line in Figures 6 and 7. It can be seen that around 3 orders of magnitude improvement of the bit rate can be attained at channel losses <20-30 dB. The secure bit rates also vary with the quality of the SPS, so for example a source with g⁽²⁾(0)=0.01, as shown in Figure 6, has a different optimum source attenuation than a source with g⁽²⁾(0)=0.001 as shown in Figure 7. Other key parameters in the simulation: SPS triggering frequency 1 GHz, transmitter efficiency 70%, receiver efficiency 80%, detector dark counts 1 Hz, corresponding to existing superconducting nanowire single photon detector technology.

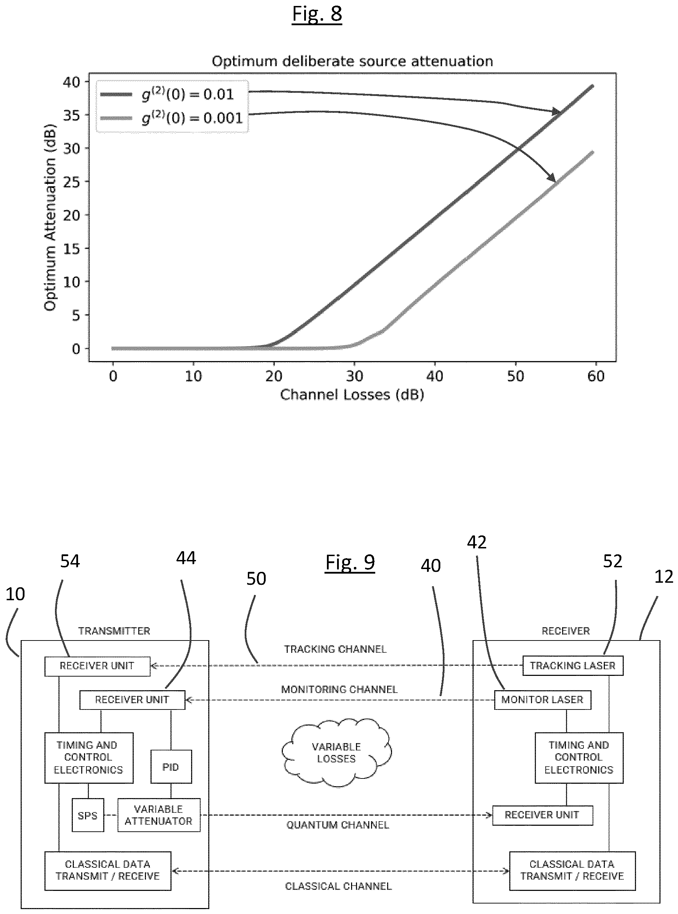

Referring to Figure 8, the optimum source attenuation for a particular source can be defined as a simple function of channel loss. In general terms the optimum source attenuation will typically be at a fixed low level, such as zero, over a range of values of channel loss below a predetermined value, i.e. at low levels of channel loss, but from that specific predetermined value of channel loss, which in the examples shown is about 20dB for the g⁽²⁾(0)=0.01 source and 30dB for the g⁽²⁾(0)=0.001 source, the optimum source attenuation increases with further increase in channel loss. Once this relationship has been defined for a given SPS transmitter unit, it can be stored, for example as a lookup table, in the system, for example in the PID controller 46 in the transmitter 10. This enables the system to monitor the losses in the quantum channel and adjust the source attenuation in response to changes in those losses.

In a modification to the system as shown in Figure 4, the receiver unit 44 is arranged to output a simple intensity signal indicative of the intensity of the received reference beam, and the controller 46 has a lookup table arranged to convert the value of the intensity signal directly to a suitable input to the variable attenuator 32 without the intermediate step of calculating the channel loss. This method can also be used where the wavelength of the monitoring channel is different from the wavelength of the SPS 30, with the difference in channel loss for the two different wavelengths being accommodated in the values of the lookup table.

Referring to Figure 9, in a further embodiment, in which features corresponding to those of Figure 4 are indicated by the same reference numerals increased by 100, the monitoring channel 140 is separate from the tracking laser system which uses a separate tracking channel 150, with a tracking laser 152 on the receiver 112 and a tracking receiver unit 154 on the transmitter 110. In this case the tracking system can use any suitable wavelength, while the monitoring system is used purely for loss measurement and preferably has the same wavelength as the quantum channel.

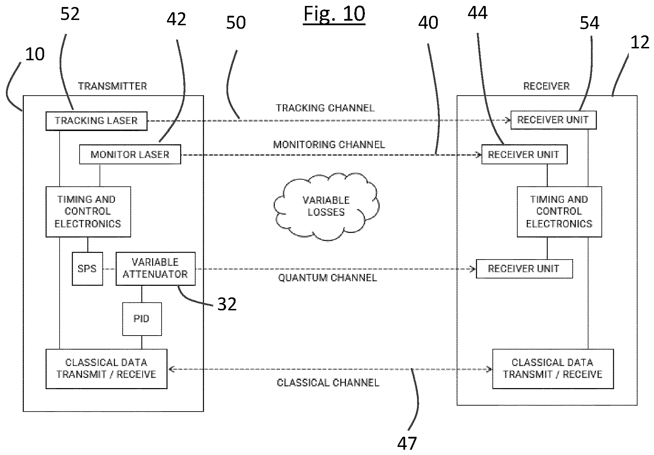

Referring to Figure 10, in a further embodiment, in which features corresponding to those of Figure 4 are indicated by the same reference numerals increased by 200, the direction of the monitoring channel 240 and the tracking channel 250 if that is separate, are reversed. Therefore the monitoring laser 242 and the tracking laser 252 are on the transmitter 210 and the two receiver units 244, 254 are on the receiver 212. In this case the channel loss on the quantum channel may be calculated on the receiver and communicated back to the transmitter 210 via the classical channel 247, or raw intensity data from the receiver unit 244 of the monitoring channel 240 may be communicated back to the transmitter 210 via the classical channel, and the channel loss calculated, or the control input to the variable attenuator generated, on the transmitter. It will be appreciated that in a modification to this embodiment the tracking laser and the monitoring laser may travel in opposite directions.

In a further embodiment the 'monitoring channel' 40 is not present and the tracking channel 50 is used for tracking the position of the satellite and hence the receiver 12. The controller 34 can therefore use the position of the satellite as determined by the tracking system to control the variable attenuator 32. It will be appreciated that, for example from the combination of Figure 3 and Figure 8, a desired attenuation as a function of the position of the satellite can be determined. The controller 34 may therefore be arranged to determine the position of the satellite, for example from signals from the tracking system 52, 54, and control the variable attenuator 32 so as to provide the optimum attenuation based on the position of the satellite. Such a system can adjust the maximum bit rate to compensate for the variation in channel loss due to the variation in the ground station to satellite distance, although it cannot also compensate for unpredictable fluctuations in the channel loss caused by changing atmospheric conditions.

In a modification to this embodiment, the controller 34 uses the fact that the position of the satellite is known as a function of time, based on its orbital path, and the controller 34, which typically includes a clock, is therefore arranged to vary the attenuation provided by the variable attenuator 32 as a function of time based on signals from the clock.

It will be appreciated that advantages arise from adding deliberate attenuation to the output of an SPS, in particular when the attenuation is both dynamic and responsive to the real-time channel loss. In this way, the output of the QKD transmitter can be tailored to maximise bit rate for any given atmospheric conditions in the free-space channel.

## Claims

1. A quantum key distribution system comprising:
a transmitter arranged to transmit a coded photon stream over a free space quantum channel, wherein the transmitter comprises a single photon source arranged to generate the coded photon stream comprising photons representing QKD bit values, and
a receiver arranged to receive the coded photon stream from the quantum channel; **characterized in that**
the transmitter further comprises attenuation means arranged to attenuate the coded photon stream, the attenuation means being variable so as to provide a variable attenuation of the coded photon stream, and
control means arranged to control the attenuation means so as to vary the attenuation.

2. A system according to claim 1 wherein the control means is arranged to control the attenuation means to vary the attenuation as a function of time.

3. A system according to claim 1 or claim 2 wherein the control means is arranged to control the attenuation means to vary the attenuation as a function of position of at least one of the transmitter and the receiver.

4. A system according to any preceding claim further comprising loss measuring means arranged to measure channel loss on the quantum channel and connected to the control means whereby the control means is arranged to control the attenuation means to vary the attenuation in response to variation in the channel loss.

5. A system according to claim 4 wherein the loss measuring means is arranged to transmit a reference beam of photons between the transmitter and the receiver and to measure losses in the reference beam thereby to measure the channel loss on the quantum channel.

6. A system according to claim 5 wherein the loss measuring means comprise a reference photon generator on the receiver and a reference photon detector on the transmitter.

7. A system according to claim 6 wherein the reference beam is a laser beam, and the transmitter is arranged to use the laser beam to monitor alignment of the transmitter and the receiver.

8. A system according to any one of claims 5 to 7 wherein the reference beam has a wavelength which is within 10% of the wavelength of the coded photon stream.

9. A system according to any one of claims 5 to 8 wherein the reference beam has a wavelength which is within 5% of the wavelength of the coded photon stream.

10. A system according to claim 9 wherein the reference beam has the same wavelength as the coded photon stream.

11. A system according to any one of claims 5 to 7 wherein the reference beam has a different wavelength from the coded photon stream, and the loss measuring means is arranged to define a relationship between measured loss of the reference beam and channel loss of the coded photon stream, and to determine the channel loss from measurements of the reference beam.

12. A system according to any preceding claim wherein the coded photon stream represents the QKD bits in the polarization states of the photons.

13. A system according to any preceding claim wherein single photon source comprises a triggered quantum emitter in which each trigger event is arranged to generate a single photon from the quantum emitter.

14. A system according to claim 4, or any preceding claim dependent on claim 4, wherein attenuation means is arranged to increase the attenuation with increasing channel loss over at least a range of channel losses.

15. A system according to claim 14 wherein said range is a first range, and the attenuation means is arranged to provide a fixed minimum attenuation over at least a second range of channel losses, optionally wherein the first range is higher than the second range.

## Patentansprüche

1. Quantenschlüsselverteilungssystem, Folgendes umfassend:
einen Sender, der eingerichtet ist, um einen codierten Photonenstrom über einen Freiraumquantenkanal zu senden, wobei der Sender eine einzelne Photonenquelle umfasst, die eingerichtet ist, um den codierten Photonenstrom zu erzeugen, der Photonen umfasst, die QKD-Bitwerte repräsentieren, und
einen Empfänger, der eingerichtet ist, um den codierten Photonenstrom aus dem Quantenkanal zu empfangen; **dadurch gekennzeichnet, dass**
der Sender weiterhin ein Dämpfungsmittel umfasst, das eingerichtet ist, um den codierten Photonenstrom zu dämpfen, wobei das Dämpfungsmittel variabel ist, um eine variable Dämpfung des codierten Photonenstroms bereitzustellen, und
ein Steuerungsmittel, das eingerichtet ist, um das Dämpfungsmittel zu steuern, um so die Dämpfung zu variieren.

2. System nach Anspruch 1, wobei das Steuerungsmittel eingerichtet ist, um das Dämpfungsmittel zu steuern, um die Dämpfung als eine Funktion der Zeit zu variieren.

3. System nach Anspruch 1 oder 2, wobei das Steuerungsmittel eingerichtet ist, um das Dämpfungsmittel zu steuern, um die Dämpfung als eine Funktion der Position von mindestens einem des Senders und des Empfängers zu variieren.

4. System nach einem der vorhergehenden Ansprüche, weiterhin ein Verlustmessmittel umfassend, das eingerichtet ist, um einen Kanalverlust auf dem Quantenkanal zu messen, und das mit dem Steuerungsmittel verbunden ist, wodurch das Steuerungsmittel eingerichtet ist, um das Dämpfungsmittel zu steuern, um die Dämpfung als Reaktion auf eine Variation des Kanalverlusts zu variieren.

5. System nach Anspruch 4, wobei das Verlustmessmittel eingerichtet ist, um einen Referenzphotonenstrahl zwischen dem Sender und dem Empfänger zu senden und Verluste in dem Referenzstrahl zu messen, um dadurch den Kanalverlust auf dem Quantenkanal zu messen.

6. System nach Anspruch 5, wobei das Verlustmessmittel einen Referenzphotonengenerator auf dem Empfänger und einen Referenzphotonendetektor auf dem Sender umfasst.

7. System nach Anspruch 6, wobei der Referenzstrahl ein Laserstrahl ist und der Sender eingerichtet ist, um den Laserstrahl zu verwenden, um einen Abgleich des Senders und des Empfängers zu überwachen.

8. System nach einem der Ansprüche 5 bis 7, wobei der Referenzstrahl eine Wellenlänge aufweist, die innerhalb von 10 % der Wellenlänge des codierten Photonenstroms liegt.

9. System nach einem der Ansprüche 5 bis 8, wobei der Referenzstrahl eine Wellenlänge aufweist, die innerhalb von 5 % der Wellenlänge des codierten Photonenstroms liegt.

10. System nach Anspruch 9, wobei der Referenzstrahl die gleiche Wellenlänge wie der codierte Photonenstrom aufweist.

11. System nach einem der Ansprüche 5 bis 7, wobei der Referenzstrahl eine andere Wellenlänge als der codierte Photonenstrom aufweist und das Verlustmessmittel eingerichtet ist, um eine Beziehung zwischen einem gemessenen Verlust des Referenzstrahls und einem Kanalverlust des codierten Photonenstroms zu definieren und den Kanalverlust aus Messungen des Referenzstrahls zu bestimmen.

12. System nach einem der vorhergehenden Ansprüche, wobei der codierte Photonenstrom die QKD-Bits in den Polarisationszuständen der Photonen repräsentiert.

13. System nach einem der vorhergehenden Ansprüche, wobei eine Einzelphotonenquelle einen ausgelösten Quantenemitter umfasst, bei dem jedes Auslöseereignis eingerichtet ist, um ein einzelnes Photon aus dem Quantenemitter zu erzeugen.

14. System nach Anspruch 4 oder einem der vorhergehenden, von Anspruch 4 abhängigen Ansprüche, wobei ein Dämpfungsmittel eingerichtet ist, um die Dämpfung mit zunehmendem Kanalverlust über mindestens einen Kanalverlustbereich zu erhöhen.

15. System nach Anspruch 14, wobei der Bereich ein erster Bereich ist und das Dämpfungsmittel eingerichtet ist, um eine feste Mindestdämpfung über mindestens einen zweiten Kanalverlustbereich bereitzustellen, wobei der erste Bereich gegebenenfalls höher ist als der zweite Bereich.

## Revendications

1. Système de distribution quantique de clés comprenant :
un émetteur agencé pour émettre un flux de photons codés sur un canal quantique dans l'espace libre, l'émetteur comprenant une source de photons uniques agencée pour générer le flux de photons codés comprenant des photons représentant des valeurs de bits QKD, et
un récepteur agencé pour recevoir le flux de photons codés depuis le canal quantique ; **caractérisé en ce que** l'émetteur comprend en outre des moyens d'atténuation agencés pour atténuer le flux de photons codés, les moyens d'atténuation étant variables de manière à fournir une atténuation variable du flux de photons codés, et
des moyens de commande agencés pour commander les moyens d'atténuation de manière à faire varier l'atténuation.

2. Système selon la revendication 1 dans lequel les moyens de commande sont agencés pour commander les moyens d'atténuation pour faire varier l'atténuation en fonction du temps.

3. Système selon la revendication 1 ou la revendication 2 dans lequel les moyens de commande sont agencés pour commander les moyens d'atténuation pour faire varier l'atténuation en fonction de la position de l'émetteur et/ou du récepteur.

4. Système selon une quelconque revendication précédente comprenant en outre des moyens de mesure de perte agencés pour mesurer une perte de canal sur le canal quantique et connectés aux moyens de commande, moyennant quoi les moyens de commande sont agencés pour commander les moyens d'atténuation pour faire varier l'atténuation en réponse à une variation de la perte de canal.

5. Système selon la revendication 4 dans lequel les moyens de mesure de perte sont agencés pour émettre un faisceau de photons de référence entre l'émetteur et le récepteur et pour mesurer des pertes dans le faisceau de référence pour mesurer ainsi la perte de canal sur le canal quantique.

6. Système selon la revendication 5 dans lequel les moyens de mesure de perte comprennent un générateur de photons de référence sur le récepteur et un détecteur de photons de référence sur l'émetteur.

7. Système selon la revendication 6 dans lequel le faisceau de référence est un faisceau laser, et l'émetteur est agencé pour utiliser le faisceau laser pour surveiller l'alignement de l'émetteur et du récepteur.

8. Système selon l'une quelconque des revendications 5 à 7 dans lequel le faisceau de référence a une longueur d'onde qui se situe à moins de 10 % de la longueur d'onde du flux de photons codés.

9. Système selon l'une quelconque des revendications 5 à 8 dans lequel le faisceau de référence a une longueur d'onde qui se situe à moins de 5 % de la longueur d'onde du flux de photons codés.

10. Système selon la revendication 9 dans lequel le faisceau de référence a la même longueur d'onde que le flux de photons codés.

11. Système selon l'une quelconque des revendications 5 à 7 dans lequel le faisceau de référence a une longueur d'onde différente de celle du flux de photons codés, et les moyens de mesure de perte sont agencés pour définir une relation entre une perte mesurée du faisceau de référence et une perte de canal du flux de photons codés, et pour déterminer la perte de canal à partir de mesures du faisceau de référence.

12. Système selon une quelconque revendication précédente dans lequel le flux de photons codés représente les bits QKD dans les états de polarisation des photons.

13. Système selon une quelconque revendication précédente dans lequel la source de photons uniques comprend un émetteur quantique déclenché dans lequel chaque événement de déclenchement est agencé pour générer un photon unique depuis l'émetteur quantique.

14. Système selon la revendication 4, ou une quelconque revendication précédente dépendante de la revendication 4, dans lequel les moyens d'atténuation sont agencés pour augmenter l'atténuation avec une perte de canal croissante sur au moins une plage de pertes de canal.

15. Système selon la revendication 14 dans lequel ladite plage est une première plage, et les moyens d'atténuation sont agencés pour fournir une atténuation minimale fixe sur au moins une deuxième plage de pertes de canal, éventuellement dans lequel la première plage est supérieure à la deuxième plage.
